# EUROPEAN PATENT APPLICATION

(11) **EP 3 907 469 A1**
(43) Date of publication of application: **10.11.2021**
(21) Application number: 19907276.0
(22) Date of filing: 24.09.2019
(51) Int. Cl.: G01C 21/20, G05D 1/02

(54) **AUTOMATIC DRIVING SYSTEM FOR GRAIN PROCESSING, AND AUTOMATIC DRIVING METHOD AND PATH PLANNING METHOD THEREFOR**

(30) Priority: 04.01.2019 CN 201910007342
(71) Applicant: FJ Dynamics Technology Co., Ltd, Xiangyang, Hubei 441100 (CN)
(72) Inventor: WU, Di, Xiangyang, Hubei 441100 (CN); WANG, Bo, Xiangyang, Hubei 441000 (CN); ZHANG, Xiao, Xiangyang, Hubei 441000 (CN); SHEN, Yongquan, Xiangyang, Hubei 441000 (CN); WANG, Qingquan, Xiangyang, Hubei 441000 (CN); TONG, Chao, Xiangyang, Hubei 441000 (CN); FAN, Shun, Xiangyang, Hubei 441000 (CN); CHEN, Rui, Xiangyang, Hubei 441000 (CN)
(74) Representative: Zaboliene, Reda
(86) International application number: PCT/CN2019/107534
(87) International publication number: WO 2020/140491

(57) **Abstract**

An automatic driving system for grain processing, and an automatic driving method and a path planning method is illustrated. The automatic driving system for grain processing comprises a grain processing host, an image processing system, a path planning system, and an image acquisition device. The image processing system is arranged on the grain processing host and acquires at least one image of farmland surrounding the grain processing host. The image processing system identifies, based on an image segmentation and identification method, an area in the image; and the path planning system plans, based on the area identified by the image processing system, at least one driving planning path. The grain processing host automatically controls driving according to the driving planning path planned by the path planning system.

## Description

### TECHNICAL FIELD

The present disclosure relates to agriculture, an autonomous driving field of agricultural machinery, and especially relates to an automatic driving system for grain processing, and an automatic driving method and a path planning method.

### BACKGROUND

Agricultural machinery refers to various machinery used in the initial processing process of agricultural products and animal products, as well as in the production of crops and animal husbandry. The types of the agricultural machinery are various, such as seeding equipment, plowing equipment, harrowing equipment, rotary tillers, plant protection equipment, harvesting equipment, and so on. In the operation process, the agricultural machinery needs to take into account of a walking system and an operation system of the mechanical equipment. When the agricultural machinery is in motion in the farmland, it is necessary to adjust a route of the agricultural machinery according to conditions of the farmland.

When the agricultural machinery is operating in farmland, it is necessary to judge the condition of the farmland and the crop growth of the farmland in real time, and to operate agricultural machinery and the operation system according to the operation condition of the farmland and the crop growth of the farmland. In the prior art, operating the operation of the agricultural machinery and the operation system can be done by human drivers and operators. The agricultural machinery needs to take into account worked area of the farmland, unworked area of the farmland, as well as boundaries and many other factors. In the operation process of the agricultural machinery, an operation of a vehicle and operation parameters needs to be adjusted in real time according to the condition of the crop. As a complex operating environment needs to be considered during driving, the agricultural equipment of the existing technology also requires the operator to adjust the operation of the agricultural machinery based on real-time information of the farmland crop. The probability of judgmental error in the operation of agricultural machinery is greater when manual operation is employed, which leads to increase in failure probability of the mechanical equipment in the course of operation.

Existing agricultural machinery is not smart, and it is not possible to get rid of the driver of the agricultural equipment. Based on the PTK satellite positioning method, a high-precision satellite positioning information can be obtained, but for self-driving agricultural machinery, especially harvester equipment, in the operation, it is more important to determine a harvested area, and an unharvest area of the current farmland crop, the boundary area of the farmland, and other information, in order to accurately operate or adjust the operation of the agricultural machinery. The agricultural machinery of the existing technology does not judge the accuracy of farmland areas, and the course of operation to the agricultural machinery is usually in accordance with a set path. Once a route deviation occurs, it is difficult to adjust and modify in a timely manner. Therefore, if a set operating path is not accurate, the operation of the agricultural machinery of the existing technology is not efficient and can even result in errors causing serious mechanical failure. In addition, when using the PTK satellite positioning method, the agricultural equipment has high performance requirements, and the required manufacturing costs and maintenance costs of the agricultural equipment are high, so the self-driving positioning of the existing technology of is not applicable to the self-driving mode of the current agricultural machinery.

### SUMMARY OF THE DISCLOSURE

A purpose of the present disclosure provides an automatic driving system for grain processing, and an automatic driving method and a path planning method, the automatic driving system identifies the farmland area based on at least one visual image.

Another purpose of the present disclosure provides an automatic driving system for grain processing, and an automatic driving method and a path planning method, wherein the automatic driving system controls the driving path by identifying unworked area, worked area, and farmland boundary area in the visual image.

Another purpose of the present disclosure provides an automatic driving system for grain processing, and an automatic driving method and a path planning method, wherein a path planning system of the automatic driving system automatically plans the path based on positioning information of current vehicle, information identified by the image processing system, and information of the navigation system.

Another purpose of the present disclosure provides an automatic driving system for grain processing, and an automatic driving method and a path planning method, wherein the automatic driving system plans the driving path and operation route of the automatic driving system based on the identified area from the visual image.

Another purpose of the present disclosure provides an automatic driving system for grain processing, and an automatic driving method and a path planning method, wherein the automatic driving system acquires images by the image acquisition device, identifies the area in the visual image, and updates or adjusts the operation route of the automatic driving system in real time according to the changed area, so as to make the automatic driving system work better.

Another purpose of the present disclosure provides an automatic driving system for grain processing, and an automatic driving method and a path planning method, wherein the image processing system of the automatic driving system, based on the acquired visual image information, uses image segmentation technology to identify the unworked area, the worked area, the farmland boundary area and the boundaries of adjacent two areas in the image.

Another purpose of the present disclosure provides an automatic driving system for grain processing, and an automatic driving method and a path planning method, wherein the image processing system of the automatic driving system, based on the acquired visual image information, uses image segmentation technology to identify crop information, such as species, height, and particle plumpness of the crop in the image, so as to enable the operation system of the automatic driving system to adjust the operation parameters based on the information of the crops.

Another purpose of the present disclosure provides an automatic driving system for grain processing, and an automatic driving method and a path planning method, wherein the image processing system of the automatic driving system identifies the area boundary in the image based on the acquired image information, so that the path planning system can plan the driving path of the vehicle based on the identified area boundary.

Another purpose of the present disclosure provides an automatic driving system for grain processing, and an automatic driving method and a path planning method, wherein the automatic driving system does not require high precision satellite positioning, therefore reducing difficulty in manufacturing the automatic driving equipment, and also reducing the maintenance cost of the automatic driving equipment.

Another purpose of the present disclosure provides an automatic driving system for grain processing, and an automatic driving method and a path planning method, wherein the automatic driving system carries out path planning based on the area division information output by the image processing system to realize automatic driving and automatic driving operation.

Other advantages and features of the invention are disclosed by the following detailed description, and can be realized by the combination of means and devices specially pointed out in the attached claims.

According to an aspect of the present disclosure, the present disclosure provides a path planning method for automatic driving system for grain processing, the path planning method includes:
step (a): acquiring at least one image of farmland around a grain processing host;
step (b): identifying and dividing an area of the farmland and boundary of the farmland corresponding to the image; and
step (c): planning at least one driving planning path based on the identified area of the farmland and the boundary of the farmland.

According to an embodiment of the present disclosure, the path planning method further includes: step (a.0): setting operation area of the farmland and at least one operation boundary corresponding to the operation area.

According to an embodiment of the present disclosure, the step (a.0) further includes: identifying the operation area and the operation boundary of the farmland by an image processing system.

According to an embodiment of the present disclosure, the step (a) further includes: based on position of the automatic driving system for grain processing, photographing the image around the automatic driving system for grain processing in real time.

According to an embodiment of the present disclosure, the step (b) further includes: segmenting the image by using an image segmentation method, and identifying and dividing the area of the image.

According to an embodiment of the present disclosure, the step (b) further includes: an image processing system using an image segmentation method to segment the image, and dividing the area of the image into an unworked area, a worked region, and a farmland boundary area.

According to an embodiment of the present disclosure, the step (b) further includes:
step (b.1): segmenting the image into a plurality of pixel regions and normalizing pixel values of the pixel regions into an array;
step (b.2): extracting the features of the pixel regions corresponding to each array; and
step (b.3): outputting a classification label of the image based on the features of the pixel regions.

According to an embodiment of the present disclosure, the step (c) further includes: step (c.1): determining the driving planning path based on positioning information of the grain processing host, area planning information of the image identified by the image processing system, and navigation information of a navigation system.

According to an embodiment of the present disclosure, the step (c) further includes: step (c.2): adjusting driving direction of the grain processing host based on crop information identified by the image processing system to generate a vehicle driving path.

According to another aspect of the present disclosure, the present disclosure provides an automatic driving method for automatic driving system for grain processing, the automatic driving method includes:
step (I): acquiring at least one image and identifying area of farmland and boundary of farmland in the image;
step (II): planning at least one driving planning path based on the area of the farmland and the boundaries of the farmland; and
step (III): controlling a grain processing host to move automatically according to the driving planning path.

According to an embodiment of the present disclosure, the step (II) further includes:
acquiring positioning information of the grain processing host; and
planning the driving planning path based on the positioning information, the identified area of the farmland and the boundaries of the farmland, and navigation information of a navigation system.

According to an embodiment of the present disclosure, the step (I) further includes: identifying crop information in the farmland from the image, wherein the crop information includes information of crop type, crop height, and particle plumpness.

According to an embodiment of the present disclosure, the automatic driving method further includes: step (IV): based on the crop information of the image, adjusting operation parameters of an operation system of the grain processing host.

According to another aspect of the present disclosure, the present disclosure provides an automatic driving system for grain processing, the automatic driving system includes:
a grain processing host;
an image processing system, wherein the image processing system is set on the grain processing host to acquire at least one image of farmland around the grain processing host, and the image processing system identifies the area of the image based on an image segmentation recognition method; and
a path planning system, wherein the path planning system plans at least one driving planning path based on the area identified by the image processing system, and the grain processing host controls automatic driving according to the driving planning path planned by the path planning system.

According to an embodiment of the present disclosure, the automatic driving system further includes an image acquisition device, the image acquisition device is set on the grain processing host, and the image acquisition device captures images in front of the grain processing host.

According to an embodiment of the present disclosure, wherein the image processing system identifies at least one worked area, at least one unworked area, and at least one farmland boundary area from the image.

According to an embodiment of the present disclosure, the automatic driving system for grain processing further includes:
an image segmentation module, the image segmentation module segments the image into a plurality of pixel regions, and each pixel region includes at least one pixel unit;
a feature module, wherein the feature module extracts features of each pixel region based on the pixel unit of the pixel region; and
a region division module, wherein the region division module identifies and divides the area of the image according to the features of the pixel region.

According to an embodiment of the present disclosure, the automatic driving system for grain processing further includes a positioning device and a navigation system, the positioning device and the navigation system are arranged on the grain processing host, wherein the positioning device acquires position information of the grain processing host, and the navigation system provides navigation information for the grain processing host.

According to an embodiment of the present disclosure, the automatic driving system for grain processing further includes a positioning device and a navigation system, the positioning device and the navigation system are arranged on the grain processing host, wherein the positioning device acquires position information of the grain processing host, and the navigation system provides navigation information for the grain processing host.

According to an embodiment of the present disclosure, the automatic driving system for grain processing further includes:
an operation area setting module, wherein the operation area setting module sets the farmland boundary area to acquire the unworked area of the farmland and an operation boundary of the farmland; and
a driving path planning module, wherein the image processing system identifies area planning information of the image based on the positioning information of the grain processing host and the navigation information of the navigation system to acquire at least one driving planning path.

Further objects and advantages of the present invention are disclosed by the following description and drawings.

### BRIEF DESCRIPTION OF THE DRAWINGS

Implementations of the present disclosure will now be described, by way of embodiments, with reference to the attached figures.
FIG. 1 is a schematic diagram of one embodiment of an automatic driving system for grain processing.
FIG. 2 is a schematic diagram of an embodiment of acquiring image in the automatic driving system for grain processing of FIG.1.
FIG. 3A is a schematic diagram of an embodiment of acquiring one image by the automatic driving system for grain processing of FIG.1.
FIG. 3B is a schematic diagram of an embodiment of acquiring another image by the automatic driving system for grain processing of FIG.1 .
FIG. 3C is a schematic diagram of an embodiment of acquiring another image by the automatic driving system for grain processing of FIG.1.
FIG. 4 is a schematic diagram of one embodiment of an image processing system of the grain processing automatic driving system divides and identifies area of the image.
FIG. 5A is a schematic diagram of one embodiment of an image processing system of the grain processing automatic driving system segments area of the image.
FIG. 5B is a block diagram of one embodiment of an image processing system of the automatic driving system for grain processing.
FIG. 6 is a schematic diagram of one embodiment of an image processing system of the automatic driving system extracting and identifying area feature of the image.
FIG. 7 is a schematic diagram of one embodiment of an image processing system of the automatic driving system outputting the image divided into areas.
FIG. 8 is a schematic diagram of one embodiment of an image processing system of the automatic driving system outputting a change in boundary division of a divided area of the image.
FIG. 9 is a schematic diagram of one embodiment of an automatic driving scene of the automatic driving system for grain processing.
FIG. 10 is a schematic diagram of one embodiment of a path planning system of the automatic driving system for grain processing.
FIG. 11A is a schematic diagram of one embodiment of a farmland path planning generated by the path planning system of the automatic driving system.
FIG. 11B is a schematic diagram of one embodiment of the path planning system of the automatic driving system adjusting the driving path.

### DETAILED DESCRIPTION

The following description is used to disclose the present invention so that the technical personnel in the art can realize the present invention. The preferred embodiments described below are for example only, and technical personnel in the field can think of other obvious variant embodiments. The basic principles of the present invention as defined in the following description may be applied to other embodiments, developed embodiments, improvement schemes, equivalent schemes, and other technical schemes that do not deviate from the spirit and scope of the present invention.

The technical personnel in the art shall understand that, in the disclosure of the present invention, the term "portrait direction", "horizontal direction", "up", "down", "front", "back", "left", "right", "vertical", "horizontal", "top", "bottom", "inside", "outer" and other indicative orientation or positional relationship is based on the orientation or position relationship shown in the drawings, and is intended to facilitate the description of the present invention and simplify the description, rather than to indicate or imply that the device or component must have a specific orientation, in a specific direction and operation, therefore, the above terms are not to be understood as limitations on the present invention.

Understandably, the term "one" should be understood as "at least one" or "one or more", i.e. in one embodiment, the quantity of one component may be one, while in another embodiment the quantity of components may be multiple, and the term "one" cannot be understood as a limit on the quantity.

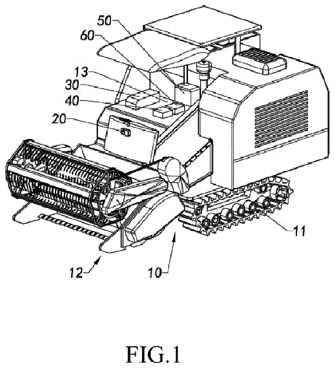

Referring to Figures 1 to 9 of the specification of the present invention, an automatic driving system for grain processing, and an automatic driving method and path planning method are illustrated in accordance with a first embodiment of the present invention. The automatic driving system for grain processing may be implemented as a crop harvester equipment with grain processing function, a crop seeding equipment, a ploughing equipment, and a crop plant protection equipment. Understandably, the type of an automatic driving system for grain processing device described in the present invention is only as an example, not as a limitation. Therefore, other types of crop equipment can also be used here. The automatic driving system obtains at least one image of environment, and visually identifies the area type of the farmland of the image after processing the image, and divides area types and boundaries of the farmland in the image.

The automatic driving system for grain processing shall divide the area type of the farmland according to the types and boundaries of each divided area, the area type divided by the automatic driving system include at least one worked area 100, at least one unworked area 200, and at least one field boundary area 300. The automatic driving system for grain processing determines a route of movement of a vehicle by a navigation system according to the divided area type, so as to achieve automatic driving.

It is worth mentioning that a self-driving vehicle, in a self-driving mode, needs to obtain accurate vehicle positioning information, especially high-precision satellite positioning information, in order to identify the route, and the self-driving vehicle needs to update obstacle information, other vehicle information, as well as pedestrians and other information, in order to achieve self-driving function at high speed. The images obtained by the automatic driving system of the invention are image data information corresponding to the crop grain in a farmland, and the images are of the scene around the vehicle and the images are obtained based on the current position of the vehicle. The automatic driving system does not require high precision satellite positioning information, but merely ordinary meter-level accuracy of satellite positioning (GPS positioning or Beidou positioning, etc.). In addition, the images obtained and processed by the automatic driving system are different from the images obtained by the self-driving vehicle, Therefore, the path planning and driving mode determined by the automatic driving system are not the same as the path planning and driving mode determined by the self-driving vehicle. Understandably, the identification mode of the present invention is different from the identification mode the self-driving vehicle.

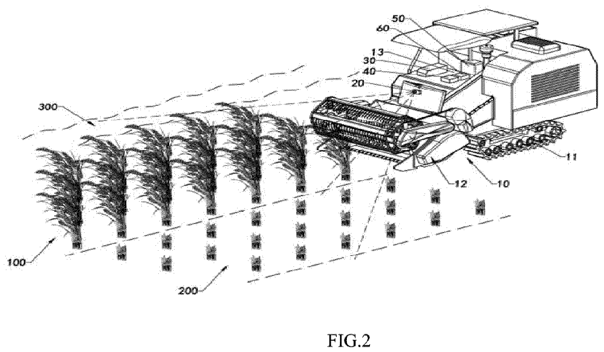

Referring to Figures 1 and 2, the automatic driving system obtains at least one image of the surrounding environment, and identifies area types of the farmland and the boundary between the areas of the farmland from the images. The automatic driving system obtains the image around the surrounding environment by means of fixed-point photography mode, video mode, mobile photography mode, etc. Understandably, the way in which the automatic driving system obtains images is here only as an example, not as a limitation. The automatic driving system includes a grain processing host 10 and at least one image acquisition device 20, wherein the image acquisition device 20 obtains at least one image of scene around the grain processing host 10.

Preferably, the image acquisition device 20 is set in the grain processing host 10. In one embodiment, the image acquisition device 20 takes still or moving pictures around the grain processing host 10. More preferably, the image acquisition device 20 is set in front part of the grain processing host 10. In one embodiment, the image acquisition device 20 can obtain the images in real time in front of the grain processing host 10. The grain processing host 10 identifies the area of the farmland from the images obtained by the image acquisition device 20, and set a driving route according to the divided area of the farmland. In one embodiment, the content of the image obtained by the image acquisition device 20 is within the field of view of the grain processing host 10. In other words, the image acquisition device 20 obtains the image within the field of view of grain processing host 10, and adjusts a travel direction of grain processing host 10 according to a position that the grain processing master 10 installed on the grain processing host 10.

In one embodiment, the image acquisition device 20 acquires images of the scene in the travel direction of the grain processing host 10 to obtain the image. In one embodiment, the image may be a two-dimensional flat image or a three-dimensional image. Understandably, the type of the image taken by the image acquisition device 20 is here only as an example, not as a limitation.

It one embodiment, the grain treatment host 10 is capable of finishing processing of crop grain during a driving process, such as the processing of crop grain includes harvesting, farming, ploughing, seeding, plant protection, harvesting operations, etc. for example, in a first embodiment of the present invention, the grain processing host 10 is a harvester equipment, and the grain treatment host 10 is controlled to driving to the unworked area 200 of the farmland for harvesting operation, in order to harvest the crop within the unworked area 200 of the farmland. The crop can be rice, wheat, corn, and so on. The grain processing host 10 execute automatic driving in the farmland according to the area divided by the image obtained by the image acquisition device 20, and conduct self-driving in the field, without a driver. Understandably, the type of the grain processing host 10 is here only as an example, not as a limitation.

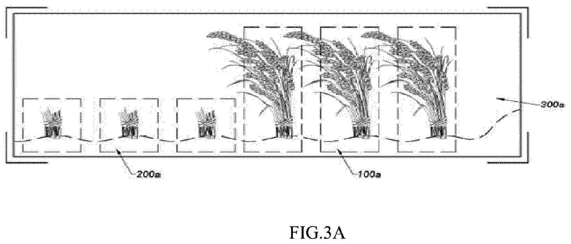

As shown in FIG. 3a to FIG. 3C, the image acquisition device 20 acquires the images of the scene around the grain processing host 10 in real time during the driving process of the grain processing host 10. Fig. 3A shows the image captured by the image acquisition device 20 when the grain processing host 10 is a grain harvester. Based on whether the grain is harvested or not, the area of the farmland is divided into at least one unharvested area 100a, at least one a harvested area 200a, and at least one a farmland boundary area 300a. In one embodiment, the harvested area 200a is the area where the crop have been harvested, and the crop in the harvested area 200a are harvested. The unharvested area 100a is an area where crop still exist, and the growing crop still exist in the unharvested area 100a. The farmland boundary area 300a is a ridge separating crops in the farmland, or an outer boundary around the farmland, or an obstacle or non-farmable area in the farmland. In one embodiment, there is no crop in the farmland boundary area 300a.

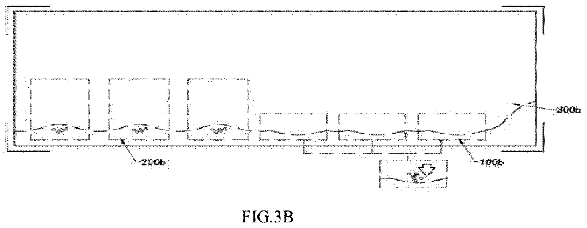

FIG. 3B shows the image captured by the image acquisition device 20 when the grain processing host 10 is a grain farming machine. The area of the farmland is divided into at least one uncultivated area 100b, at least one cultivated area 200b, and at least one farmland boundary area 300b, wherein the uncultivated area 100b is the area where the crop have not been cultivated, and the cultivated area 200b represents the area where the crop have been cultivated. The farmland boundary area 300b is a ridge separating different crops in the farmland, an outer boundary around the farmland, or an obstacle area in the farmland.

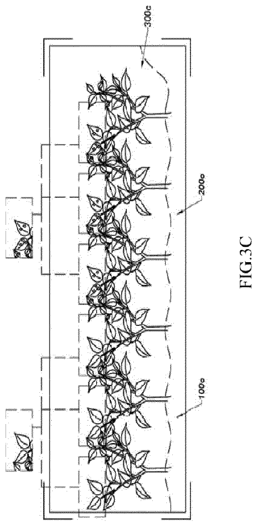

FIG. 3C shows the image captured by the image acquisition device 20 when the grain processing host 10 is used as a plant protection device, such as a pesticide spraying device. The area in the farmland is divided into at least one non spraying area 100c, at least one spraying area 200c, and at least one farmland boundary area 300c. The non spraying area 100c represents the area where the crops have not been sprayed with pesticide, the spraying area 200c represents the area where the crops have been sprayed with pesticide, and the farmland boundary 300b is ridge that separates crops in the farmland, an outer boundary of the farmland, and the area where there are obstacles in the farmland.

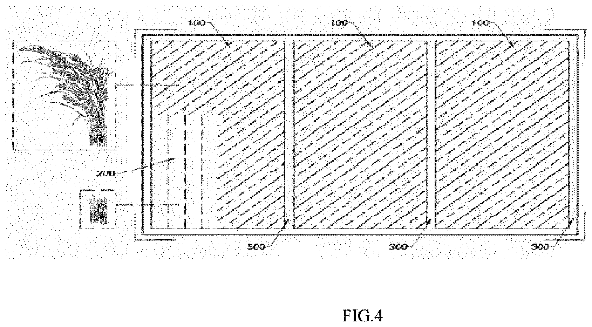

As shown in FIG. 1 and FIG.4, by image segmentation recognition method, the unworked area 100, the worked area 200, and the farmland boundary area 300 are identified from the image obtained by the image acquisition apparatus 20, and the boundaries between the areas (the unworked area 100, the worked area 200, and the farmland boundary area 300) are distinguished. The automatic driving system for grain processing further includes an image processing system 30, wherein the image processing system 30 identifies the unworked area 100, the worked area 200, and the farmland boundary area 300 from the image obtained by the image acquisition device 20.

It should be noted that the image processing system 30 uses the image segmentation recognition method to identify the areas and boundaries from the image, and the areas represent the areas of the farmland in front of the grain processing host 10. The boundaries represent the boundaries of the farmland in front of the grain processing host 10. Based on the areas and boundaries identified by the image processing system 30 using the image segmentation recognition technology, the grain processing host 10 is controlled to move and operate in the unworked area in the farmland. For example, the image acquisition device 20 set at the front end of the harvester device acquires an image of the farmland in front of the harvester device, wherein the image captured by the image acquisition device 20 is segmented and identified by the image processing system 30 to identify the unworked area 100, the worked area 200, the working area 200, and the farmland boundary area 300. The grain processing host 10, that is, the host of the harvester device, plans the vehicle driving path and harvesting operation based on the areas and boundaries identified by the image processing system 30.

It should be noted that the image processing system 30 uses the image segmentation and recognition technology to identify the type of crop, the height of crop, the ripeness and other information from the image captured by the image acquisition device 20. The image processing system 30 can determine whether the crop has been harvested based on the type of the crop and the height of the crop in the identified image. The image processing system 30 can be used to adjust the operation parameters based on the particle plumpness in the identified image. In other words, the image processing system 30 can identify the area type of the farmland and the boundary of the farmland according to the image captured by the image acquisition device 20, and identify the type, the height, the particle plumpness, and the crop maturity, etc. of the crop in the farmland.

In one embodiment, the image processing system 30 segments and identifies the image acquired by the image acquisition device 20 to the areas and boundaries of the image based on one of a segmentation method based on threshold, a segmentation method based on a region, a segmentation method based on edge, and a segmentation method based on a specific theory. In one embodiment, the image processing system 30 uses a deep learning algorithm to segment and identify the image and perform area division and boundary limitation on the image. In other words, the image processing system 30 uses the deep learning algorithm to identify the areas of the farmland and the boundary of the farmland from the image, and the grain processing host drive and operate according to the identified areas of the farmland and the boundary of the farmland. More preferably, the image processing system 30 uses the image segmentation and identification technology of the convolution neural network algorithm as the deep learning algorithm to identify the unworked area 100, the worked area 200 and the farmland boundary area 300 from the image.

It is worth mentioning that the processing algorithm used by the image processing system 30 is only an example here, not a limitation. Therefore, the image processing system 30 can also use other algorithms to segment and identify the obtained image, so as to identify the area of the farmland and the boundary of the farmland from the image.

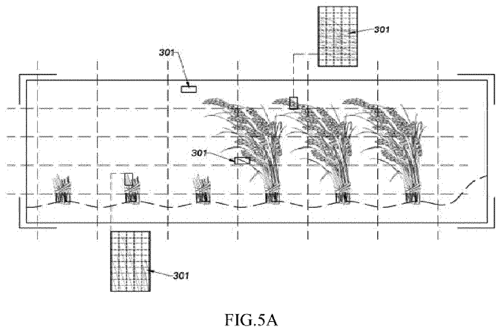

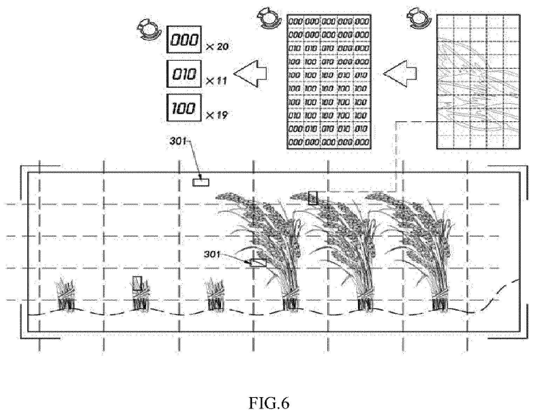

Referring to FIG. 5A and FIG. 6, the image processing system 30 segments the image obtained by the image acquisition device 20 into a number of pixel regions 301, each of the pixel regions 301 includes at least one pixel unit. It should be noted that the image corresponds to the area around the grain processing host 10, and accordingly, the pixel area 301 of the image corresponds to the farmland in a specific area or the image information of the crop. Each pixel region 301 formed by segmentation is normalized so that the pixel unit of the pixel region 301 is normalized to a value or as part of an array corresponding to the size of the pixel value. In other words, the image processing system 30 normalizes the segmented pixel region 301 into a corresponding values or arrays for the image processing system extracting image features and dividing the areas.

The image processing system 30 extracts the image features corresponding to the pixel region 301 based on the array corresponding to each pixel region 301. The image processing system 30 obtains the image features corresponding to the pixel region 301 according to the array corresponding to the pixel region 301. In one embodiment, when the image processing system 30 uses the convolutional neural network algorithm, such as a two-dimensional convolutional neural network, an input layer of the convolutional neural network corresponds to the two-dimensional array or three-dimensional array in the pixel area 301. A hidden layer of the convolutional neural network extracts features from the array of the input layer, selects features and filters features after the feature is extracted. The convolutional neural network outputs a classifying label of the pixel area 301 based on the features corresponding to the array, and the classification label corresponds to the unworked area 100, the worked area 200, or the farmland boundary area 300.

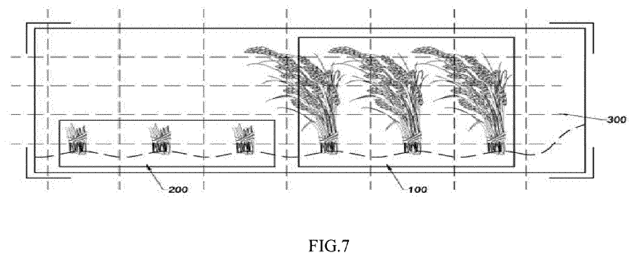

Referring to FIG. 6 and FIG. 7, the image processing system 30 identifies the regional features corresponding to the pixel region 301 by extracting the features of the array of the pixel region 301. In one embodiment, the features corresponding to the pixel region 301 includes a height feature of crop plants, the spacing of crop plants in the farmland, the color of crop, the color of farmland land, the type features of the crop, the height features of the crop, a spacing between the crop in the farmland, the color features of the crop, the color features of the farmland, the type features of the crop, the features of the farmland, the particle plumpness, a quantity of the crop, etc. The image processing system 30 outputs a classification label corresponding to the pixel region 301 according to the extracted features. In one embodiment, the classification label correspondingly identifies the type of the area and the boundary corresponding to the pixel region 301 based on the extracted features.

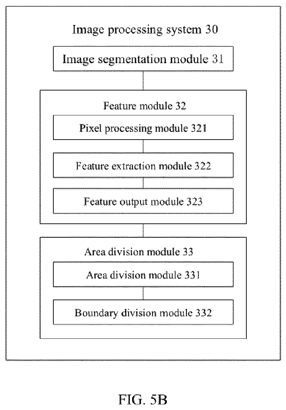

Referring to FIG. 5B, the image processing system 30 includes an image segmentation module 31, a feature module 32, and an area division module 33. The image segmentation module 31 acquires the image captured by the image acquisition device 20, and generates a number of pixel regions 301 by segmenting and processing the image. In one embodiment, each pixel region 301 includes at least one pixel unit. The feature module 32 uses the deep learning algorithm to extract the type of the feature of the pixel area 301, selects the feature and filter the feature. The area division module 33 divides the image based on the features of the pixel region 301 extracted by the feature module 32 to generate the classification label corresponding to the unworked area 100, the worked area 200, and the farmland boundary area 300.

In one embodiment, the image segmentation module 31 divides the image into a number of the pixel regions 301, and each of the pixel regions 301 has the same size, shape and range. It should be noted that the image segmentation module 31 can segment the image according to a threshold of the image pixel. Namely, the size, shape and range of the pixel region 301 segmented by the image segmentation module 31 can be different. In one embodiment, the pixel area 301 divided by the image segmentation module 31 is a single pixel unit when the feature module 32 of the image processing system 30 adopts the convolution neural network algorithm to segment the image.

In one embodiment, the feature module 32 includes a pixel processing module 321, a feature extraction module 322, and a feature output module 323. The pixel processing module 321 processes the array of the pixel unit in the pixel area 301. In one embodiment, the pixel processing module 321 normalizes the pixel area 301 into an array suitable for processing. The feature extraction module 322 inputs the array of the pixel area 301 processed by the pixel processing module 321, extracts the type of the features corresponding to the array, selects the features, and filters the features, to retain data as to availability and eliminate data as to interferences, so as to make the features more prepared. The feature output module 323 outputs the features extracted by the feature extraction module 322, and the area division module 33 generates a classification label of the corresponding area in combination with the features output by the feature output module 323.

The area division module 33 divides the areas of the image and sets area boundaries based on the features of the pixel region 301 extracted by the feature module 32. Correspondingly, the area division module 33 further includes an area division module 331 and a boundary division module 332. The area division module 331 divides different areas according to the features of the pixel region 301, and the boundary division module 332 divides boundary range of the areas, so as to determine the range of the area.

During the movement of the grain processing host 10 of the automatic driving system for grain processing, the image acquisition device 20 acquires the images in the front view of the grain processing host 10 in real time. Accordingly, the image processing system 30 acquires the image captured by the image acquisition device 20 in real time, and uses the image segmentation and identification technology to identify the divided area and the area boundary range corresponding to the farmland in the image. When the divided area and the area boundary range identified by the image processing system 30 are not consistent with the previous area boundary range, the identified area and area boundary range corresponding to the image are adjusted.

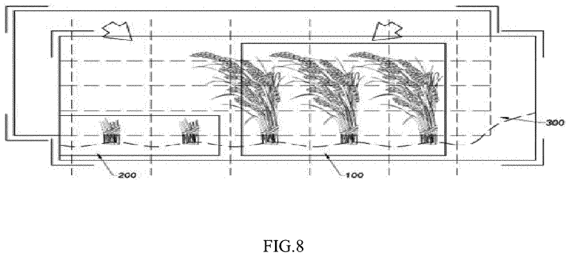

Referring to FIG. 8, problems such as vibration and directional deviation occur during driving course. When the direction of the grain processing host 10 is deviated or the divided area is changed due to the vibration of the vehicle, the image processing system 30 updates the divided area and the area boundary range of the image in real time.

Referring to FIG. 1, the automatic driving system further includes a positioning device 40 and a navigation system 50. In one embodiment, the positioning device 40 is arranged on the grain processing host 10. The positioning device 40 obtains positioning information of the grain processing host 10. In one embodiment, the positioning device 40 uses the positioning information of the satellite to obtain the position information of the grain processing host 10. The positioning device 40 can be a GPS device or a Beidou Positioning device. The navigation system 50 is arranged on the grain processing host 10. The navigation system 50 navigates for the grain processing host 10. The grain processing host 10 executes automatic driving and operation based on the positioning information of the positioning device 40 and area planning information (such as divided areas and area boundary range) obtained by the image processing system 30, as well as a navigation information of the navigation system 50.

It should be noted that the divided area and the boundary range of the farmland obtained by the image processing system 30 processing the image are updated to the navigation system 50 in real time to update the navigation information of the navigation system 50. In one embodiment, the navigation system 50 can be an inertial integrated navigation system. It is understood that the types of the navigation system 50 are only of an exemplary nature here, not a limitation, and therefore the navigation system 50 can also be other types of navigation devices.

Correspondingly, the grain processing host 10 of the automatic driving system for grain processing includes a vehicle 11, an operation system 12 arranged on the vehicle 11, and a driving control system 13. In one embodiment, the operation system 12 is driven by the vehicle 11, and executes a grain processing operation, such as a harvesting operation. The driving control system 13 controls the driving of the vehicle 11 and the operation of the operation system 12. It is worth mentioning that the driving control system 13 has an self-driving mode and an operation driving mode. When the automatic driving system for grain processing is in the self-driving mode, the driving control system 13 automatically controls the operation of the vehicle 11 and the operation system 12. Accordingly, when the automatic driving system for grain processing is in the operation driving mode, the driving control system 13 allows a driver to operate the vehicle 11 and control the operation of the operation system manually.

In one embodiment, the automatic driving system for grain processing is a harvester device, wherein the operation system 12 can be a harvesting operation device. The driving control system 13 controls the driving of the vehicle 11 and the operation of the operation system 12. In other words, the driving control system 13 controls adjustment of the operation parameters of the operation system 12 during the driving of the vehicle 11. The driving control system 13 acquires information of the image processing system 30, such as the type of the crop, the height of the crop, the particle plumpness, the diameter of the crop stalks, etc., and adjusts the operation parameters of the operation system 12 based on the acquired information, such as operation speed, width, and height of the operation system 12, and parameters of cutting or threshing.

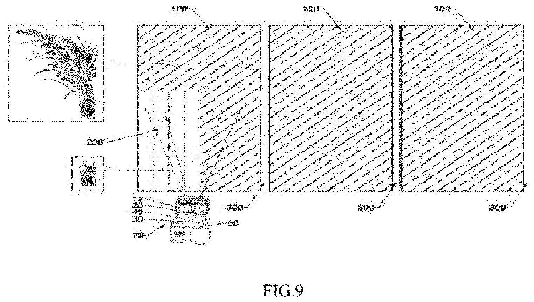

FIG. 9 of the present invention shows the implementation of the automatic driving system in the field of the self-driving and the harvesting operations. When the driving control system 13 of the grain processing host 10 is in the self-driving mode, the driving control system 13 acquires the positioning information of the vehicle 11 provided by the positioning device 40, the navigation information provided by the navigation system 50, and identification information of the area provided by the image processing system 30, by which the vehicle 11 is controlled to travel in the unworked area 100 of the farmland to complete the grain harvesting operation. During the driving operation, the image acquisition device 20 acquires the image in front of the vehicle 11 in real time, wherein the image is identified by the image processing system 30 using the image segmentation recognition technology to identify the area and the area boundary range. When the divided area and area boundary range obtained by the image processing system 30 are inconsistent with the previous area and the boundary range, the image processing system 30 replaces the original area and area boundary range, and updates the navigation data of the navigation system 50 so that the driving control system 13 obtains new navigation information to adjust the driving and the working route of the vehicle 11.

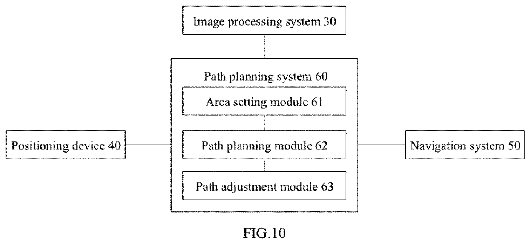

As shown in FIGs 10 to 11B, based on the positioning information of the grain processing host 10 obtained by the positioning device 40, the area planning information identified by the image processing system 30, and the navigation information of the navigation system 50, the automatic driving system for grain processing generates at least one planning path. The driving control system 13 of the grain processing host 10 controls the driving of the vehicle 11 and the operation of the operation system 12 according to the generated planning path. In one embodiment, the automatic driving system for grain processing further includes a path planning system 60, wherein the path planning system 60 plans at least one driving path of the vehicle 11 for the grain processing host 10. The path planning system 60 obtains the positioning information of the positioning device 40, obtains the area planning information of the image identified by the image processing system 30, and obtains the navigation information of the navigation system 50, and plans the driving path of the vehicle 11 according to the obtained information.

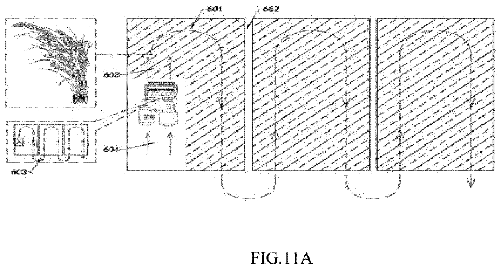

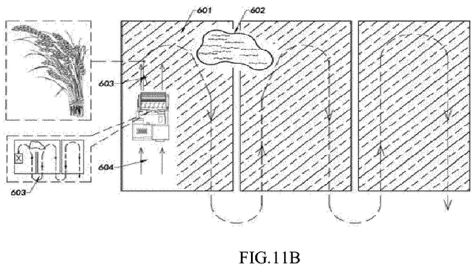

Referring to FIG. 11A and FIG. 11B, the path planning system 60 identifies or sets out at least one operation area 601 and at least one operation boundary 602 in the farmland, wherein the operation area 601 is the largest operation range of the automatic driving system for grain processing, and the driving control system 13 controls the vehicle 11 to travel in the operation boundary 602. It should be noted that the operation area 601 and the operation boundary 602 can be identified by the image processing system 30 identifying the farmland boundary area 300 in the image. Alternatively, it is the path planning system 60 which can set the operation area 601 of the automatic driving system.

The path planning system 60 plans at least one driving path based on the outermost of the operation boundary 602 of the operation area 601. When the width of the operation area 601 is larger than an operation width of the operation system 12, the path planning system 60 plans a "circular" shaped driving route or an "s" shaped driving route. It should be noted that the way of the driving route planned by the path planning system 60 is only an example, not a limitation. Therefore, other driving routes can also be applied.

In one embodiment, when the vehicle 11 is travelling to far end boundary of the operation area 601, the path planning system 60 replans at least one driving path based on the range of the current unworked area 100. Namely, when the vehicle 11 is driving to the far end boundary of the operation area 601, the operation area 601 and the operation boundary 602 are updated by the path planning system 60 for the vehicle II, and a new driving path is planned according to the updated operation area 601.

It should be noted that the driving control system 13 controls the vehicle 11 to drive according to the driving path planned by the path planning system 60. In one embodiment, the driving control system 13 controls the operation system 12 to harvest the outermost crop of the operation area 401. Namely, the driving control system 13 controls the operation system 12 to harvest crop in the unworked area 100 based on the operation boundary 602.

Referring to FIG. 10, the path planning system 60 of the automatic driving system for grain processing includes an area setting module 61, a path planning module 62, and a path adjustment module 63. The area setting module 61 identifies the operation area 601 and the operation boundary 602 of the farmland based on the image processing system 30 identifying the boundary area of the farmland in the image, or based on setting the grain processing host to operate in the operation area 601 and the operation boundary 602 in the farmland. As the operation of the grain processing host 10 causes the unworked area 100 and the worked area 200 to change, the area setting module 61 updates the range of the operation area 601 in real time and the boundary of the operation boundary 602 in order to generate a new unworked area 100 and a new worked area 200.

The path planning module 62 obtains at least one driving plan path 603 based on the positioning information of the grain processing host 10, the area planning information of the image identified by the image processing system 30, and the navigation information of the navigation system 50. In one embodiment, the driving control system 13 controls the vehicle 11 to drive according to the driving plan path 603. The path adjustment module 63 adjusts the driving direction of the grain processing device 10 based on the information of the crop of the image identified by the image processing system 30 to generate a vehicle driving path 604, wherein the vehicle driving path 604 is basically coincident with or parallel to the driving plan path 603. When the image processing system 30 identifies that an adjustment of a harvesting range is required, the vehicle driving path generated by the path adjustment module 63 deviates from the driving planning path 603.

According to another embodiment of the invention, the invention further provides a path planning method used in the automatic driving system for grain processing, wherein the path planning method includes steps as below.
(a) Acquiring at least one image of the farmland around the grain processing host 10.
(b)Identifying and dividing the area of the farmland and the boundary of the farmland corresponding to the image.
(c)Planning At least one driving planning path 603 based on the identified area.

The path planning method further includes the following steps: (a.0) setting the operation area 601 of the farmland and at least one operation boundary 602 corresponding to the operation area 601. It should be noted that the operation area 601 of the farmland includes the worked area 200, the unworked area 100, and the farmland boundary area 300. The boundary area 300 corresponding to the outside of the farmland coincides with the operation boundary 602.

The path planning method step (a.0) further includes the following steps: identifying the operation area 601 and the operation boundary 602 of the farmland by the image processing system 30 identifying the farmland area and the boundary from the image.

The step (b) of the path planning method further includes the following steps: using the image segmentation technique to segment the image, and identifying and dividing the region of the image.

In step (a) of the above path planning method, the image information around the grain processing host 10 is captured in real time based on the position and the driving direction of the grain processing host 10. In step (b) of the above path planning method, the image processing system uses the image segmentation technology to segment the image information, and identify and divide the regions from the image as the unworked region 100, the worked region 200, and the farmland boundary region 300. Step (b) of the path planning method further includes the following steps.
(b.1) Dividing the image into a number of the pixel regions 301, and normalizing the pixel values of the pixel regions 301 into an array.
(b.2) Extracting the features of the pixel region 301 corresponding to each array.
(b.3)Outputting a classification label of the image based on the features of the pixel region 301.

In step (b.3) of the path planning method, the classification label corresponds to the unworked area 100, the worked area 200, and the farmland boundary area 300.

In step (b) of the above path planning method, the image processing system 30 uses the convolution neural network algorithm of the deep learning to divide the image and identify the areas of the image.

In step (c) of the path planning method further includes step (c.1): Based on the positioning information of the grain processing host 10, the image processing system 30 identifies the area planning information of the image and the navigation information of the navigation system 50, the driving planning path 603 is obtained.

The step (c) of the path planning method further includes step (c.2): adjusting the driving direction of the grain processing host 10 based on the information that the image processing system 30 recognizes the crop of the image to form the vehicle driving path 604.

The path planning method further includes: step (d) comparing whether the divided area and the area boundary range identified by the image processing system 30 are consistent with the previous area boundary range, adjusting the divided areas and the area boundary range corresponding to the image when the divided area and the area boundary range identified by the image processing system 30 are consistent with the previous area boundary range, and keeping the divided area and the area boundary range unchanged when the divided area and the area boundary range identified by the image processing system 30 are not consistent with the previous area boundary range.

According to another aspect of the invention, the disclosure further provides an automatic driving method applied in the automatic driving system for grain processing, and the automatic driving method includes the following steps.
(1) Acquiring at least one image and identifying the area and the area boundary of the farmland in the image.
(2) Based on the area and the area boundary of the farmland, planning at least one driving planning path 603.
(3) Controlling the grain processing host 10 to move automatically according to the driving planning path 603.

The step (I) includes the method for automatically identifying the farmland area and the farmland boundary provided by the invention. The driving control system 13 controls the driving and operation of the grain processing host 10 based on the farmland area and the farmland boundary identified by the image processing system 30.

The step (I) of the automatic driving method further includes: identifying the corresponding crop information in the farmland in the image, wherein the crop information in the farmland includes the information of the crop type, the height of the crop, the particle plumpness.

The step (II) of the automatic driving method further includes the following steps.

Obtaining the positioning information of the grain processing host 10.

Based on the positioning information, identification information of the image, and the navigation information of the navigation system, planning the driving planning path 603.

Accordingly, in the step (III), the driving control system 13 controls the driving of the vehicle 11 of the grain processing host 10 according to the positioning of the grain processing host 10, the area planning information of the farmland obtained by the image processing system 30, and the navigation information.

The automatic driving method further includes steps (IV) : adjusting the operation parameters of the operation system 12 of the grain processing host 10 based on the identified information of the image.

Those skilled in the art should understand that the above description and the embodiments of the present disclosure shown in the drawings are only examples and do not limit the present disclosure. The purpose of the present disclosure has been completely and effectively achieved. The function and structure principle of the present disclosure have been shown and explained in the embodiments. Without departing from the principle, the implementation of the present disclosure may have any deformation or modification.

## Claims

1. A path planning method of an automatic driving system for grain processing, comprising:
step (a): acquiring at least one image of farmland surrounding a grain processing host;
step (b): identifying and dividing areas of the farmland and boundaries of the farmland corresponding to the image of the farmland; and
step (c): planning at least one driving planning path based on the identified areas of the farmland and the identified boundaries of the farmland.

2. The path planning method of claim 1, further comprising:
step (a.0): setting an operation area of the farmland and at least one operation boundary corresponding to the operation area.

3. The path planning method of claim 2, wherein the step (a.0) further comprises:
identifying the operation area and the at least one operation boundary of the farmland by an image processing system which also identifies the at least one image of the farmland.

4. The path planning method of claim 3, wherein the step (a) further comprises:
based on a position of the automatic driving system for grain processing, photographing the image surrounding the automatic driving system in real time.

5. The path planning method of claim 1, wherein the step (b) further comprises:
segmenting the image of the farmland by applying an image segmentation method, and identifying and dividing the areas of the image.

6. The path planning method of claim 5, wherein the step (b) further comprises:
an image processing system applying an image segmentation method to segment the image of the farmland, and dividing areas in the image into an unworked area, a worked region, and a farmland boundary area.

7. The path planning method of claim 6, wherein the step (b) further comprises:
step (b.1): segmenting the at least one image of the farmland into a plurality of pixel regions and normalizing pixel values of the plurality of pixel regions into an array;
step (b.2): extracting features of the plurality of pixel regions corresponding to the array; and
step (b.3): outputting a classification label of the at least one image of the farmland based on the extracted features of the plurality of pixel regions.

8. The path planning method of claim 1, wherein the step (c) further comprises:
step (c.1): determining the driving planning path based on positioning information of the grain processing host, area planning information of the at least one image of the farmland identified by the image processing system, and navigation information of a navigation system.

9. The path planning method of claim 1, wherein the step (c) further comprises:
step (c.2): adjusting a driving direction of the grain processing host based on crop information identified by an image processing system to generate a vehicle driving path.

10. An automatic driving method of an automatic driving system for grain processing, comprising:
step (I): acquiring at least one image and identifying areas of farmland and boundaries of farmland in the image;
step (II): planning at least one driving planning path based on the areas of the farmland and the boundaries of the farmland; and
step (III): controlling a grain processing host to move automatically according to the driving planning path.

11. The automatic driving method of claim 11, wherein the step (II) further comprises:
acquiring positioning information of the grain processing host; and
planning the driving planning path based on the positioning information, the identified areas of the farmland and the boundaries of the farmland, and navigation information of a navigation system.

12. The automatic driving method of claim 11, wherein the step (1) further comprises:
identifying crop information in the farmland from the image, wherein the crop information comprises information of crop type, crop height and particle plumpness.

13. The automatic driving method of claim 12, further comprising:
step (IV): based on the crop information of the image, adjusting operation parameters of an operation system of the grain processing host.

14. An automatic driving system for grain processing, comprising:
a grain processing host;
an image processing system, which is set on the grain processing host to acquire at least one image of farmland surrounding the grain processing host, and the image processing system identifies the areas of the image based on an image segmentation recognition method; and
a path planning system, which plans at least one driving planning path based on the areas identified by the image processing system, and the grain processing host controls automatic driving according to the driving planning path planned by the path planning system.

15. The automatic driving system for grain processing of claim 14, wherein the automatic driving system further comprises an image acquisition device, the image acquisition device is set on the grain processing host, and the image acquisition device captures the image in front of the grain processing host.

16. The automatic driving system for grain processing of claim 15, wherein the image processing system identifies at least one worked area, at least one unworked area and at least one farmland boundary area from the image.

17. The automatic driving system for grain processing of claim 16, further comprising:
an image segmentation module, which segments the image into a plurality of pixel regions, each pixel region comprising at least one pixel unit;
a feature module, which extracts features of each pixel region based on the pixel unit of the pixel region; and
a region division module, which identifies and divides the areas of the image according to the features of the pixel region.

18. The automatic driving system for grain processing of claim 14, wherein the automatic driving system for grain processing further comprises a positioning device and a navigation system, the positioning device and the navigation system are arranged on the grain processing host, wherein the positioning device acquires position information of the grain processing host, and the navigation system provides navigation information for the grain processing host.

19. The automatic driving system for grain processing of claim 17, wherein the automatic driving system for grain processing further comprises a positioning device and a navigation system, the positioning device and the navigation system are arranged on the grain processing host, wherein the positioning device acquires position information of the grain processing host, and the navigation system provides navigation information for the grain processing host.

20. The automatic driving system for grain processing of claim 18, further comprising:
an operation area setting module, which sets the farmland boundary area to acquire the unworked area of the farmland and an operation boundary of the farmland; and
a driving path planning module, which identifies area planning information of the image based on the positioning information of the grain processing host and the navigation information of the navigation system to acquire at least one driving planning path.

21. The automatic driving system for grain processing of claim 19, further comprising:
an operation area setting module, which sets the farmland boundary area to acquire the unworked area of the farmland and an operation boundary of the farmland; and
a driving path planning module, which identifies area planning information of the image based on the positioning information of the grain processing host and the navigation information of the navigation system to acquire at least one driving planning path.
